# EUROPEAN PATENT APPLICATION

(11) **EP 2 575 369 A2**
(43) Date of publication of application: **03.04.2013**
(21) Application number: 12182544.2
(22) Date of filing: 31.08.2012
(51) Int. Cl.: H04N 13/04

(54) **Apparatus and method for displaying 3D image**

(30) Priority: 28.09.2011 KR 20110098566
(71) Applicant: Samsung Electronics Co., Ltd., Suwon-si, Gyeonggi-do, 443-742 (KR)
(72) Inventor: Park, Jae-sung, Gyeonggi-do (KR); Kim, Hyung-rae, Seoul (KR); Sung, Jun-ho, Seoul (KR); Yun, Sang-un, Seoul (KR); Hwang, Min-cheol, Seoul (KR)
(74) Representative: Walaski, Jan Filip

(57) **Abstract**

An apparatus and method for displaying a three-dimensional (3D) image are provided. The apparatus includes an image correction unit which separates R, G, and B unit frame images from an input unit frame image and converts lines of each of the R, G, and B unit frame images into lines of black pixels; a display panel which sequentially outputs the R, G, and B unit frame images each having the lines of black pixels; and a polarizing element which outputs the R, G, and B unit frame images output by the display panel as left- and right-eye images for a user by polarizing on one side of each of the lines of black pixels in each of the R, G, and B unit frame images differently from the other side of each of the lines of black pixels in each of the R, G, and B unit frame images.

## Description

The present invention relates to providing an apparatus and method for displaying a three-dimensional (3D) image, and more particularly, to providing an apparatus and method for displaying a 3D image, in which a 3D image can be realized with improved color representation by using a color filter-less (CFL) liquid crystal display (LCD) and a polarizing element that is driven in connection with the CFL LCD.

Three-dimensional (3D) imaging, which creates a 3D image based on binocular disparity, is classified as a glasses-aided 3D imaging method using polarized glasses, shutter glasses, or the like or a glasses-less 3D imaging method involving the use of, for example, a lenticular lens array attached onto a display device without a requirement of glasses. The former is referred to as stereoscopy, and the latter is referred to as auto-stereoscopy.

Stereoscopy may be classified as an anaglyph stereoscopy method in which images are made up of two color layers (for example, red (R) and blue (B) layers or R and green (G) layers) and provide a stereoscopic 3D effect when viewed with glasses where the two lenses are equipped with different filters (for example, R and B filters or R and G filters), a Pulfrich effect-based stereoscopy method in which a stereoscopic 3D effect is provided by employing filters with different transmissivity levels in the left- and right-eye glasses of a pair of 3D glasses, a polarizing filter-based stereoscopy method in which various optical principles are applied to a stereoscopic 3D projection, or a liquid crystal (LC) shutter glasses-based stereoscopy method in which different perspectives for each eye are displayed while alternatively turning off each of the LC shutter glasses. In particular, in the polarizing filter-based stereoscopy method, a polarizing plate may be provided at the surface of a display device such that beams parallel to the axis of polarizing filters on the left- and right-eye glasses of a pair of polarized glasses may be emitted therefrom. The polarizing plate may include a plurality of sub-polarizing plates whose axis is parallel to the axis of the polarizing filters on the left- and right-eye glasses of the pair of polarized glasses. Different polarized beams emitted from the display device may be incident upon the left- and right-eye glasses of the pair of polarized glasses so that a user wearing the pair of polarized glasses may perceive a stereoscopic 3D effect due to the binocular disparity.

In the meantime, as part of the effort to improve the optical efficiency of typical liquid crystal displays (LCDs) that use color filters, color filter-less (CFL) LCDs with no color filters, which are driven in a sequential manner by synchronizing pixel data with R, G, and B light sources, have been developed, and research has been vigorously conducted on ways to apply CFL LCDs to various types of stereoscopic 3D image display devices. More specifically, typical LCDs are equipped with color filters, and realize R, G, and B via pixels, whereas CFL LCDs do not include color filters and provide R, G, and B beams with the use of a backlight so as to improve the transmissivity of light.

However, in a case in which a CFL LCD is applied to a stereoscopic 3D image display device by related-art polarizing filter-based stereoscopy, a color breakup phenomenon may occur during the sequential driving of a backlight, a variation in color gamut may be caused by undesirable color mixing, and even crosstalk may be generated, especially in a case in which stereoscopic 3D images are viewed from the stereoscopic 3D image display device on the move or from a viewing point which is not fixed. Therefore, there is a need for method that allows the user to choose external inputs more rapidly and conveniently.

Exemplary embodiments address at least the above problems and/or disadvantages and other disadvantages not described above. Also, the exemplary embodiments are not required to overcome the disadvantages described above, and the exemplary embodiments may not overcome any of the problems described above.

The present invention provides an apparatus and method for displaying a three-dimensional (3D) image, which is capable of reducing or preventing a variation in a color gamut that may result from unwanted color mixing by using a color filter-less (CFL) liquid crystal display (LCD) to form lines of black pixels in each of red (R), green (G), and blue (B) frames.

According to an aspect of the present invention, provided is a method of displaying a 3D image, the method including: receiving a first image including a plurality of left-eye pixels and a plurality of right-eye pixels; generating R, G, and B frames based on the first image and sequentially displaying the R, G, and B frames; and controlling a direction of polarization so that a plurality of left-eye pixels and a plurality of right-eye pixels in each of the R, G, and B frames are polarized in different directions.

The R frame may include a plurality of R left-eye pixels and a plurality of R right-eye pixels.

The R frame may also include a plurality of black pixels which are arranged to be adjacent to the plurality of R left-eye pixels or the plurality of R right-eye pixels.

The plurality of black pixels may be disposed between the plurality of R left-eye pixels and the plurality of R right-eye pixels.

The displaying may include switching positions of the plurality of left-eye pixels and the plurality of right-eye pixels on a per-frame basis.

The controlling may include controlling a driving of a voltage to a liquid crystal element.

The displaying may include sequentially displaying the R, G, and B frames by synchronizing a CFL LCD and an RGB backlight.

The displaying may include sequentially displaying the R, G, and B frames each having the plurality of left-eye pixels, a plurality of color mixing-prevention pixels, and the plurality of right-eye pixels sequentially arranged therein.

According to another aspect of the present invention, provided is an apparatus for displaying a 3D image, the apparatus including: an image correction unit which receives a first image including a plurality of left-eye pixels and a plurality of right-eye pixels, and generates R, G, and B frames based on the first image; a display panel which sequentially displays the R, G, and B frames; and a polarizing element which controls a direction of polarization so that a plurality of left-eye pixels and a plurality of right-eye pixels in each of the R, G, and B frames are polarized in different directions.

The R frame may include a plurality of R left-eye pixels and a plurality of R right-eye pixels.

The R frame may also include a plurality of black pixels which are arranged to be adjacent to the plurality of R left-eye pixels or the plurality of R right-eye pixels.

The plurality of black pixels may be disposed between the plurality of R left-eye pixels and the plurality of R right-eye pixels.

The image correction unit may switch positions of the plurality of left-eye pixels and the plurality of right-eye pixels in each of the R, G, and B frames on a per-frame basis.

The polarizing element may control a driving of a voltage to a liquid crystal element.

The display panel may sequentially display the R, G, and B frames by synchronizing a CFL LCD and an RGB backlight.

The image correction unit may control the display panel to sequentially display the R, G, and B frames each having the plurality of left-eye pixels, a plurality of color mixing-prevention pixels, and the plurality of right-eye pixels sequentially arranged therein.

According to another aspect of the present invention, provided is an apparatus for displaying a 3D image, the apparatus including: an image correction unit which separates R, G, and B unit frame images from an input unit frame image and converts arbitrary lines of each of the R, G, and B unit frame images into lines of black pixels; a display panel which sequentially outputs the R, G, and B unit frame images each having the lines of black pixels; and a polarizing element which outputs the R, G, and B unit frame images output by the display panel as left- and right-eye images for a user by polarizing a portion on one side of each of the lines of black pixels in each of the R, G, and B unit frame images differently from a portion on the other side of each of the lines of black pixels in each of the R, G, and B unit frame images.

The image correction unit may form the lines of black pixels by converting the arbitrary lines of each of the R, G, and B unit frame images into black data and turning off data lines of the display panel corresponding to the arbitrary lines of each of the R, G, and B unit frame images through switching control.

The image correction unit may form the lines of black pixels in each of the R, G, and B unit frame images such that patterns of arrangement of the lines of black pixels in the R, G, and B unit frame images coincide with one another.

The polarizing element may polarize one side (or the other side) of each of the lines of black pixels in each of the R, G, and B unit frame images at a first time during the sequential display of the R, G, and B unit frame images differently from one side (or the other side) of each of the lines of black pixels in each of the R, G, and B unit frame images at a second time that follows the first time.

The image correction unit may form the lines of black pixels in each of the R, G, and B unit frame images while alternating between odd-numbered lines and even-numbered lines such that patterns of arrangement of the lines of black pixels in each pair of adjacent unit frame images, among the R, G, and B unit frame images, do not coincide with each other.

The polarizing element may polarize one side (or the other side) of each of the lines of black pixels in each of the R, G, and B unit frame images at a first time during the sequential display of the R, G, and B unit frame images and one side (or the other side) of each of the lines of black pixels in each of the R, G, and B unit frame images at a second time that follows the first time by using the same polarization method.

According to another aspect of the present invention, provided is a method of displaying a 3D image, the method including: separating R, G, and B unit frame images from an input unit frame image; converting arbitrary lines of each of the R, G, and B unit frame images into lines of black pixels such that patterns of arrangement of the lines of black pixels in the R, G, and B unit frame images coincide with one another; and outputting the R, G, and B unit frame images by polarizing one side (or the other side) of each of the lines of black pixels in each of the R, G, and B unit frame images at a first time when the R, G, and B unit frame images are all displayed differently from one side (or the other side) of each of the lines of black pixels in each of the R, G, and B unit frame images at a second time when the R, G, and B unit frame images are all displayed, and that follows the first time.

The converting may include converting the arbitrary lines of each of the R, G, and B unit frame images into black data.

The converting may include turning off data lines of a display panel corresponding to the arbitrary lines of each of the R, G, and B unit frame images through a switching control.

According to another aspect of the present invention, provided is a method of displaying a 3D image, the method including: separating R, G, and B unit frame images from an input unit frame image; converting arbitrary lines of each of the R, G, and B unit frame images into lines of black pixels while alternating between odd-numbered lines and even-numbered lines such that patterns of arrangement of the lines of black pixels in a pair of adjacent unit frame images, among the R, G, and B unit frame images, do not coincide with each other; and outputting the R, G, and B unit frame images by polarizing one side (or the other side) of each of the lines of black pixels in each of the R, G, and B unit frame images and one side (or the other side) of each of the lines of black pixels in each of the R, G, and B unit frame images by using the same polarization method.

The converting may include converting the arbitrary lines of each of the R, G, and B unit frame images into lines of black pixels such that patterns of arrangement of the lines of black pixels in the R and B unit frame images coincide with each other, and that a pattern of arrangement of the lines of black pixels in the G unit frame image differs from the patterns of arrangement of the lines of black pixels in the R and B unit frame images.

The outputting may also include polarizing the R and B unit frame images in the same pattern and polarizing the G unit frame image differently from the R and B unit frame images.

The above and/or other aspects of the exemplary embodiments will be more apparent by describing certain exemplary embodiments with reference to the accompanying drawings, in which:
FIG. 1 is a diagram illustrating a system for realizing a three-dimensional (3D) image according to an exemplary embodiment;
FIG. 2 is a block diagram illustrating a liquid crystal display (LCD) device illustrated in FIG. 1, according to an exemplary embodiment;
FIG. 3 is a diagram illustrating an example of the waveform of a voltage applied to a polarizing element illustrated in FIG. 1, according to an aspect of the exemplary embodiments;
FIG. 4 is a diagram illustrating the concept of the sequential driving of an apparatus for displaying a 3D image illustrated in FIG. 1, according to an aspect of the exemplary embodiments;
FIG. 5 is a diagram illustrating the concept of the sequential driving of the apparatus for displaying a 3D image illustrated in FIG. 1, according to another aspect of the exemplary embodiments;
FIG. 6 is a diagram illustrating the concept of the sequential driving of the apparatus for displaying a 3D image illustrated in FIG. 1, according to another aspect of the exemplary embodiments;
FIG. 7 is a flowchart illustrating a method of displaying a 3D image, according to an aspect of exemplary embodiments; and
FIG. 8 is a flowchart illustrating a method of displaying a 3D image, according to another aspect of the exemplary embodiments.

Certain exemplary embodiments will now be described in greater detail with reference to the accompanying drawings.

In the following description, the same drawing reference numerals are used for the same elements even in different drawings. The matters defined in the description, such as detailed construction and elements, are provided to assist in a comprehensive understanding of the exemplary embodiments. Thus, it is apparent that the exemplary embodiments can be carried out without those specifically defined matters. Also, well-known functions or constructions are not described in detail since they would obscure the exemplary embodiments with unnecessary detail.

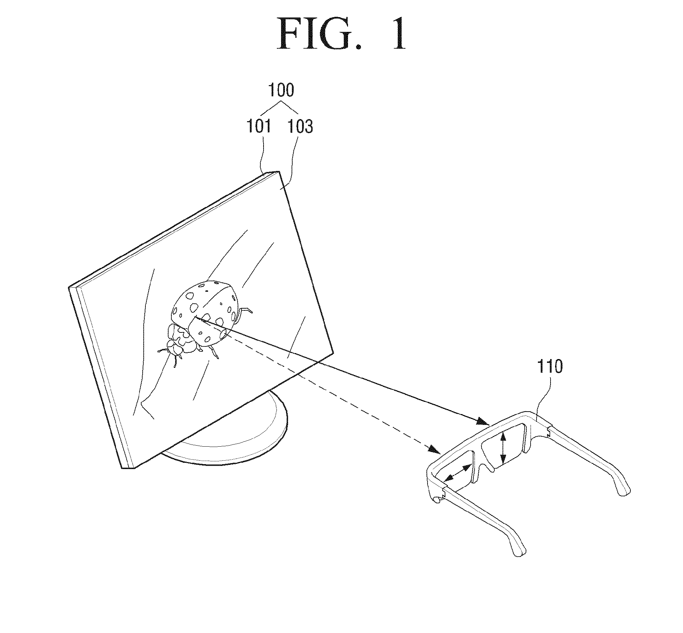

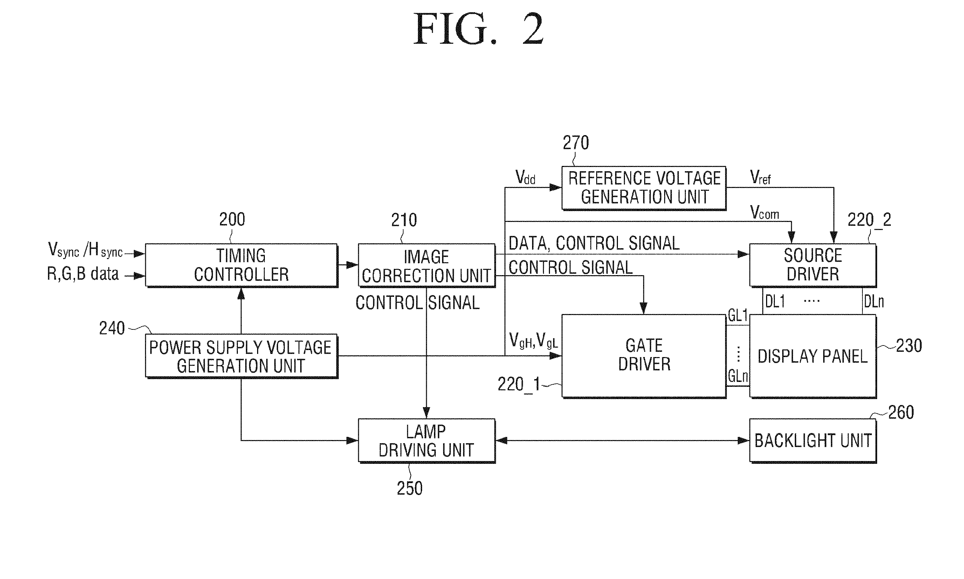

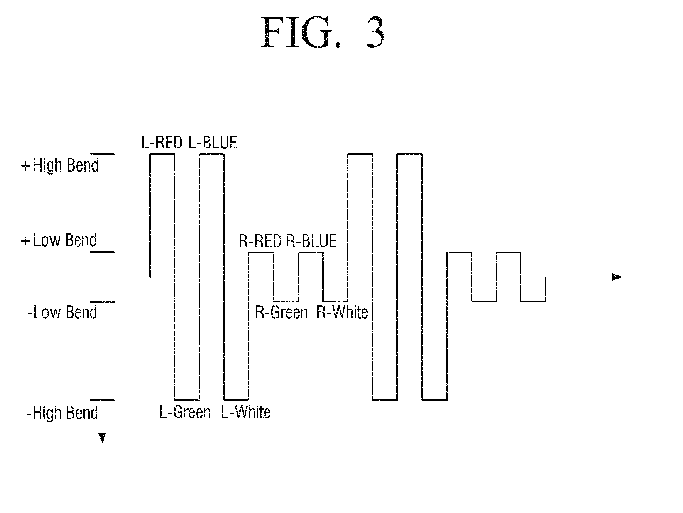

FIG. 1 is a diagram illustrating a system for realizing a three-dimensional (3D) image, according to an exemplary embodiment, FIG. 2 is a block diagram illustrating an LCD device illustrated in FIG. 1, and FIG. 3 is a diagram illustrating an example of the waveform of a voltage applied to a polarizing element illustrated in FIG. 1, according to an exemplary embodiment.

Referring to FIGS. 1 to 3, a system for realizing a 3D image includes an apparatus 100 for displaying a 3D image and a pair of glasses 110 for a user. The apparatus 100 may include an LCD device 101 and a polarizing element 103.

For example, the LCD device 101 may be a color filter-less (CFL) liquid crystal display (LCD). In this example, the CFL LCD may include a display panel 230 which realizes an image without a requirement of any color filter and a light-emitting diode (LED) backlight unit 260 which sequentially provides red (R) light, green (G) light, and blue (B) light.

The LCD device 101 may be provided with a unit frame image (or a first image) into which R, G, and B data are mixed, may generate a plurality of R, G, and B unit frame images that are classified in units of pixels based on the first image, and may sequentially display the R, G, and B unit frame images on the display panel 230. The odd- or even-numbered horizontal or vertical lines of pixels in the R, G, or B unit frame may be output as lines of black pixels. The odd- and even-numbered horizontal or vertical lines of the R, G, or B unit frame may be mixed up, thereby obtaining lines of black pixels. The R, G, and B unit frame images may be configured to be identical in terms of which of the odd- and even-numbered lines of pixels thereof should be output as lines of black pixels. Alternatively, if the odd-numbered lines of pixels in the R unit frame are output as lines of black pixels, the even-numbered lines of pixels in the G unit frame image that follows the R unit frame image may be output as lines of black pixels, and the odd-numbered lines of pixels in the B unit frame image that follows the G unit frame image may be output as lines of black pixels. For example, the output of lines of a unit frame image as lines of black pixels not only includes converting the lines of the unit frame image into black data or inserting black data into the unit frame image but also includes turning off particular data lines through switching control.

The polarizing element 103 may be controlled not in a passive manner but in an active manner, and may thus be referred to as an active retarder. In this example, the polarizing element 103 may include a liquid crystal layer (not shown). The polarizing element 103 may be separate from the LCD device 101, and may be attached to the LCD device 101. Alternatively, the polarizing element 103 may be formed in one body with the LCD device 101. The polarizing element 103 may control the liquid crystal layer in units of horizontal or vertical lines by using a driving voltage whose level varies as shown in FIG. 3, and may thus output the R, G, and B unit frame images generated by the LCD device 101 as left- and right-eye images for the glasses 110. In the example illustrated in FIG. 1, unlike in the example illustrated in FIG. 3, no white (W) voltage may be necessary. The polarizing element 103 may be provided with the driving voltage illustrated in FIG. 3 by a power supply voltage generation unit 240 of the LCD device 101, and may be controlled by a timing controller 200 or an image correction unit 210 of the LCD device 101.

For example, in a case in which the polarizing element 103 outputs left- and right-eye images in units of vertical lines, the polarizing element 103 may vertically polarize an image corresponding to odd-numbered vertical lines, and may horizontally polarize an image corresponding to even-numbered vertical lines (or vice versa). Alternatively, the polarizing element 103 may circularly polarize an image corresponding to odd-numbered vertical lines clockwise, and may circularly polarize an image corresponding to even-numbered vertical lines counterclockwise. Alternatively, the polarizing element 103 may linearly polarize an image corresponding to odd-numbered vertical lines, and may circularly polarize an image corresponding to even-numbered vertical lines. The polarization of left- and right-eye images may be performed in various manners other than those set forth herein.

In a case in which the R, G, and B unit frame images are configured to be identical in terms of which of the odd- and even-numbered (horizontal or vertical) lines of pixels thereof should be output as lines of black pixels, the polarizing element 103 may horizontally polarize a left-eye image and vertically polarize a right-eye image at a first time during the sequential output of the R, G, and B unit frame images, and may then vertically polarize the left-eye image and horizontally polarize the right-eye image at a second time that follows the first time. That is, the polarizing element 103 may perform vertical polarization and horizontal polarization on an image on one side of a line of black pixels and an image on the other side of the line of black pixels, respectively. In this example, the line of black pixels may be subject to either vertical or horizontal polarization.

Alternatively, in a case in which the R, G, and B unit frame images, which are output by LCD device 101, are configured to differ from one another in terms of which of the odd- and even-numbered lines of pixels thereof should be output as lines of black pixels, the pattern of the arrangement of lines of black pixels on the display panel 230 may vary from one unit frame image to another unit frame image. In this example, the polarizing element 103 may uniformly perform horizontal polarization on an image on one side of each line of black pixels and vertical polarization on an image on the other side of each line of black pixels. In this manner, not only variations in the positions of lines of black pixels between the R, G, and B unit frame images but also variations in the positions of horizontal and vertical polarizations between the R, G, and B unit frame images may be recognized.

The glasses 110 may be polarized glasses. The left-eye glass of the glasses 110 may be configured to perceive a horizontally-polarized image, and the right-eye glass of the glasses 110 may be configured to perceive a vertically-polarized image (or vice versa). Alternatively, the left-eye glass of the glasses 110 may be configured to perceive a clockwise-polarized image, and the right-eye glass of the glasses 110 may be configured to perceive a counterclockwise-polarized image. Alternatively, the left-eye glass of the glasses 110 may be configured to perceive a linearly-polarized image, and the right-eye glass of the glasses 110 may be configured to perceive a circularly-polarized image. There is nearly no restriction to the type of polarization method by which an image is perceived by the glasses 110.

Referring to FIG. 2, the LCD device 101 may include all or some of the following elements: the timing controller 200; the image correction unit 210; a gate driver 220_1; a source driver 220_2; the display panel 230; the power supply voltage generation unit 240; a lamp driving unit 250; the backlight unit 260; and a reference voltage generation unit 270.

The timing controller 200 may operate in connection with an interface unit such as, for example, a graphics card, and may include a scalar (not shown) and a control signal generator (not shown). The graphics card may appropriately convert image data provided by an external source to the resolution of the LCD 101, and may output the converted image data. The image data may include R video data, G video data, and B video data, and the graphics card may generate a plurality of control signals such as, for example, a clock signal DCLK, a vertical synchronization signal Vsync, and a horizontal synchronization signal Hsync, in consideration of the resolution of the LCD device 101. The scalar may be provided with 8-bit R, G, and B data by the graphics card, and may perform data realignment on the 8-bit R, G, and B data, thereby obtaining 6-bit R, G, and B data. The control signal generator may generate a control signal such as, for example, a timing signal for controlling timing for the gate driver 220_1 and the source driver 220_2, in response to the receipt of a control signal from the graphics card. The 6-bit R, G, and B data and the control signal (i.e., the timing signal) generated by the control signal generator may be provided to the image correction unit 210. Alternatively, the control signal generated by the control signal generator may be directly provided from the timing controller 200 to the gate driver 220_1, the source driver 220_2, and the lamp driving unit 250.

The image correction unit 210 may form the odd- or even-numbered horizontal or vertical lines of pixels in each of the R, G, and B unit frame images as lines of black pixels to prevent any unwanted artifacts such as color breakup, color shift, crosstalk, and the like. For example, the image correction unit 210 may convert the odd- or even-numbered horizontal or vertical lines of pixels in each of the R, G, and B unit frame images into black data or insert black data into each of the odd- or even-numbered horizontal or vertical lines of pixels in each of the R, G, and B unit frame images and may output the resulting R, G, and B unit frame images. Alternatively, the image correction unit 210 may perform switching control such that odd- or even-numbered data lines may be turned off until a unit frame image corresponding to a particular color is output. The conversion of the odd- or even-numbered horizontal or vertical lines of pixels in each of the R, G, and B unit frame images into black data will hereinafter be described in further detail.

For example, the image correction unit 210 may convert the odd- or even-numbered horizontal or vertical lines of each of the R, G, and B unit frame images into black data such that the patterns of the arrangement of the black data in the R, G, and B unit frame images may coincide with one another. In this example, the LCD device 101 may be driven by using a first driving method. In another example, the image correction unit 210 may form lines of black pixels in each of the R, G, and B unit frame images while alternating between odd-numbered lines and even-numbered lines. In this example, the LCD device 101 may be driven by using a second driving method. That is, if the even-numbered vertical lines of the R unit frame image are converted into black data, the odd-numbered vertical lines of the G unit frame image, which follows the R unit frame image, may be converted into black data. The designer of the system illustrated in FIG. 1 may determine whether to convert the horizontal lines or the vertical lines of the R, G, and B unit frame images into black data.

The image correction unit 210 may operate in connection with a memory unit (not shown) which may be implemented as a lookup table. For example, to drive the LCD device 101 using the first driving method, the image correction unit 210 may use conversion data (or correction data) present in a first lookup table. Alternatively, to drive the LCD device 101 using the second driving method, the image correction unit 210 may use conversion data (or correction data) present in a second lookup table. By using the first and second lookup tables, it is possible to quickly convert lines of the R, G, and B unit frame images into black data.

The gate driver 220_1 may be provided with a gate-on voltage VgH and a gate-off voltage VgL that are generated by the power supply voltage generation unit 240. The gate-on voltage VgH and the gate-off voltage VgL may be applied to a plurality of gate lines GL1 to GLn of the display panel 230 in synchronization with a control signal provided by the image correction unit 210 or a control signal provided by the timing controller 200. In response to the application of a gate voltage to the gate driver 220_1, the gate driver 220_1 may sequentially apply a voltage on a per-horizontal line basis under the control of the image correction unit 210 or the timing controller 200.

The source driver 220_2 may be provided with a common voltage Vcom that is generated by the power supply voltage generation unit 240 or a reference voltage Vref (or a gamma voltage) that is provided by the reference voltage generation unit 270. The source driver 220_2 may be provided with the R, G, and B unit frame images and a control signal by the image correction unit 210. The common voltage Vcom may be provided to a common electrode (not shown) of the display panel 230. The reference voltage Vref may be provided to a digital-to-analog (D/A) converter in the source driver 220_2 and may thus be used for representing the grayscale of a color image. The R, G, and B unit frame images may be provided from the image correction unit 210 to the D/A converter. Digital information relating to the R, G, and B unit frame images may be converted into an analog grayscale voltage that represents a particular color grayscale level, and the analog grayscale voltage may be provided to the display panel 230. For example, the R, G, and B unit frame images or the analog grayscale image may be provided to the display panel 230 in synchronization with a control signal provided by the image correction unit 210.

The display panel 230 may include a first substrate (not shown), a second substrate (not shown) and a liquid crystal layer (not shown) interposed between the first substrate and the second substrate. The gate lines GL1 to GLn and a plurality of data lines DL1 to DLn may be formed on the first substrate. The gate lines GL1 to GLn and the data lines DL1 to DLn may intersect each other on the first substrate and may thus define a plurality of pixel regions. A plurality of pixel electrodes may be formed in the pixel regions, and particularly, at the intersections between the gate lines GL1 to GLn and the data lines DL1 to DLn. A plurality of thin film transistors (TFTs) may be formed at the corners of their respective pixel regions. In response to the TFTs being turned on, liquid crystal molecules in the liquid crystal layer may be twisted by as much as the difference between a voltage applied to the pixel electrodes on the first substrate and a voltage applied to a common electrode on the second substrate so that the liquid crystal layer may sequentially transmit therethrough R light, G light, and B light emitted from the backlight unit 260. To sequentially transmit R light, G, light, and B light through the display panel 230, the display panel 230 may be implemented as a CFL display panel. A CFL display panel may realize an image by forming three unit frame images for R light, G light, and B light, respectively, to form a plurality of other unit frame images having various colors.

The power supply voltage generation unit 240 may be provided with a common use voltage such as, for example, an alternating current (AC) voltage of 110 V or 220 V, by an external voltage source, and may generate various levels of direct current (DC) voltages based on the common use voltage. For example, the power supply voltage generation unit 240 may generate a DC voltage of 15 V, and may provide the generated DC Voltage to the gate driver 220_1 as the gate-on voltage VgH. For example, the power supply voltage generation unit 240 may generate a DC voltage of 24 V, and may provide the generated DC voltage to the lamp driving unit 250. For example, the power supply voltage generation unit 240 may generate a DC voltage of 12 V, and may provide the generated DC voltage to the timing controller 200. The power supply voltage generation unit 240 may also generate a DC voltage for driving the polarizing element 103, and may provide the generated DC voltage to the polarizing element 103.

The lamp driving unit 250 may convert a voltage provided by the power supply generation unit 240, and may provide the converted voltage to the backlight unit 260. The lamp driving unit 250 may operate in synchronization with a control signal provided by the image correction unit 210 to sequentially drive R, G, and B LEDs of the backlight unit 260. The lamp driving unit 250 may include a feedback circuit that performs feedback control on a driving current of the backlight unit 260 so that the R, G, and B LEDs of the backlight unit 260 can uniformly emit light.

The backlight unit 260 may include R, G, and B LEDs. The backlight unit 260 may be implemented as an edge-type backlight unit in which R, G, and B LEDs are arranged along the boundaries of a display panel, a direct-type backlight unit in which R, G, and B LEDs are arranged directly below a display panel, or the like. The backlight unit 260 may be driven to sequentially provide R light, G light, and B light under the control of the lamp driving unit 250.

The reference voltage generation unit 270, which may also be referred to as a gamma voltage generation unit, may receive a DC voltage of, for example, 10 V from the power supply voltage generation unit 240, may divide the received DC voltage into a plurality of voltages with the use of a dividing resistor (not shown), and may provide the plurality of voltages to the source driver 220_2. The source driver 220_2 may represent 256 grayscale levels for R, G, and B data based on the plurality of voltages provided by the reference voltage generation unit 270.

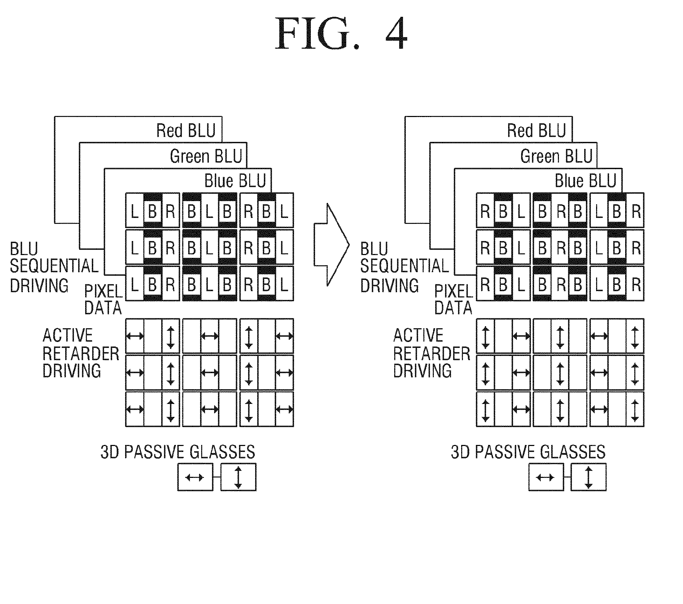

FIG. 4 is a diagram illustrating the concept of the sequential driving of the apparatus 100 according to an exemplary embodiment.

Referring to FIG. 1 and the left side of FIG. 4, left-eye image data and right-eye image data on either side of each line of black pixels in each of R, G, and B frames may both be turned on. In this example, a left-eye image L and a right-eye image R may be separated according to the direction of retardation or polarization of the polarizing element 103 such as, for example, an active retarder, and may thus be input to the glasses 110 (for example, a pair of 3D glasses) so that a user may perceive depth therefrom. Each line of black pixels in each of the R, G, and B frames may be subject to any type of linear polarization such as, for example, vertical, horizontal or splay polarization.

The state of the application of data corresponding to R, G, and B frames after the sequential driving of the R, G, and B frames illustrated on the left side of FIG. 4 is as illustrated in the right side of FIG. 4. Referring to FIG. 4, after the sequential driving of R, G, and B frames, left-eye image data and right-eye image data may switch places so that lines of the R, G, and B frames that previously correspond to the left-eye image L may be output as parts of the right-eye image R, and that lines of the R, G, and B frames that previously correspond to the right-eye image R may be output as parts of the left-eye image L. In this manner, it is possible to prevent a reduction in resolution, which may be caused by inserting no black data into particular lines of R, G, and B frames, by controlling the liquid crystal layer of the polarizing element 103.

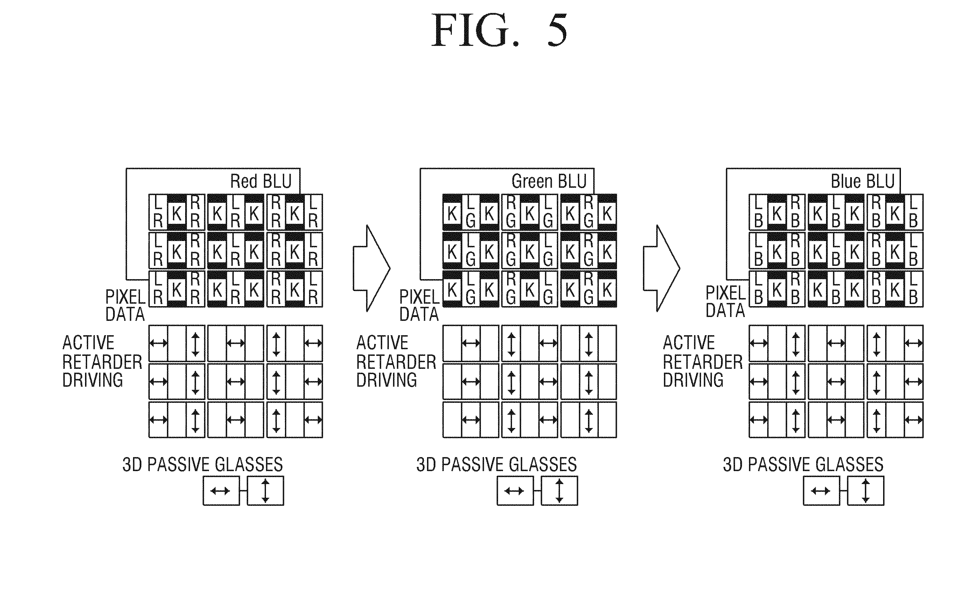

FIG. 5 is a diagram illustrating the concept of the sequential driving of the apparatus 100 according to another exemplary embodiment.

Referring to FIG. 1 and the left side of FIG. 5, left-eye image data and right-eye image data on either side of each line of black pixels in an R frame may both be turned on. A left-eye R image and a right-eye R image may be separated according to the direction of retardation of an active retarder, and may be input to the glasses 110 (for example, a pair of 3D glasses) so that a user may perceive depth therefrom. Each line of black pixels in the R frame may be subject to any type of linear polarization such as, for example, vertical, horizontal or splay polarization.

Referring to the middle side of FIG. 5, left-eye image data and right-eye image data on either side of each line of black pixels in a G frame may both be turned on. The G frame differs from the R frame in terms of the positions of lines of black pixels. The positions of pixels to be polarized by an active retarder may be varied based on the positions of left-eye G pixel data and right-eye G pixel data. Accordingly, a left-eye G image and a right-eye G image may be separated and may be input to the glasses 110 so that a user may perceive depth therefrom.

Referring to the right side of FIG. 5, left-eye B data and right-eye B data in a B frame may be arranged in the same pattern as the left-eye R data and the right-eye R data in the R frame illustrated on the left side of FIG. 5. A left-eye B image and a right-eye B image may be separated in the same manner used to separate a left-eye R image and a right-eye R image, and may be input to the glasses 110 so that a user may perceive depth therefrom.

In short, R, G, and B frames that are sequentially driven in the manner illustrated in FIG. 5 may be synthesized by the eyes of a user so that the user may perceive colors therefrom. In addition, the R, G, and B frames may be input to the eyes of the user as left- and right-eye images separately so that the user may perceive depth therefrom.

In a typical 240 Hz CFL LCD, liquid crystal molecules may often fail to properly respond to a transition from R pixel data to G pixel data or from G pixel data to B pixel data within a predefined amount of time, for example, 4.3 ms, thereby resulting in unwanted color mixing. However, according to the example illustrated in FIG. 5, it is possible to reduce the number of pixels in which color crosstalk occurs to 1/3 by forming lines of black pixels in each of R, G, and B frames. The occurrence of unwanted color mixing in lines of black pixels formed in each of R, G, and B frames may be ignorable because a rising time is generally much faster than a falling time.

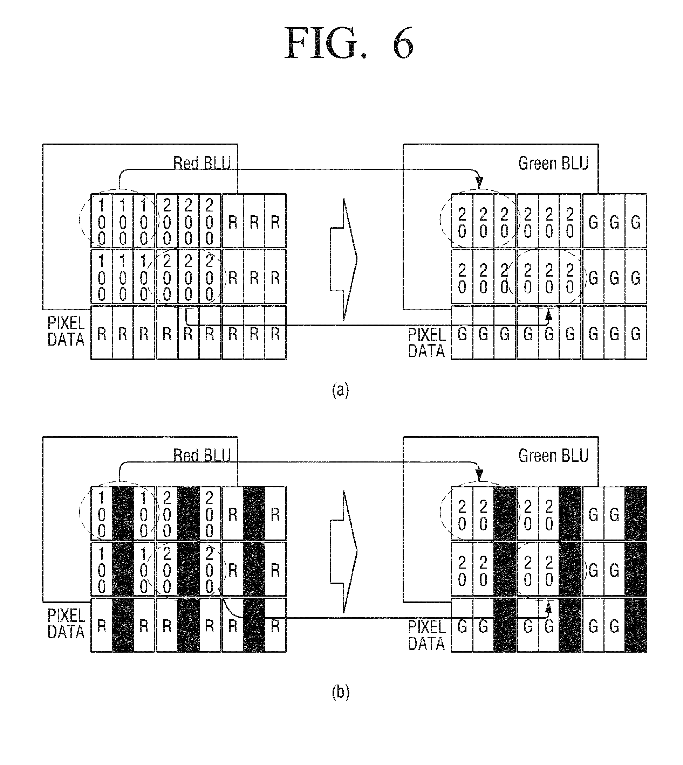

FIG. 6 is a diagram illustrating the principles of line switching for the LCD device 101.

Exemplary embodiments are directed toward preventing the occurrence of any unwanted color mixing and crosstalk in connection with the driving of an apparatus for displaying a 3D image, in consideration that the influence of pixel data of a previous frame on pixel data of a current frame may vary from one pixel to another pixel. For example, referring to FIG. 6(a), the values of pixels at (n, m) and (i, j) are 100 and 200, respectively, in a previous frame and are both 20 in a current frame, and a grayscale level that may be represented by the current frame may vary depending on the values of pixels in the previous frame. Accordingly, a gray-to-gray response time may vary from a change from a pixel value of 200 to a pixel value of 20 to a change from a pixel value of 100 to a pixel value of 20, and thus, the same color may appear differently in different parts of an image.

Referring to FIG. 6(b), by sequentially forming lines of black pixels in a frame, it is possible to prevent unwanted color mixing by reducing error rate as compared to the example illustrated in FIG. 6(a). That is, by sequentially forming lines of black pixels to replace particular lines of a frame, it is possible to reduce an error rate through dynamic capacitance compensation (DCC) and thus prevent unwanted color mixing, as compared to the example illustrated in FIG. 6(a). Lines of black data may be formed in each frame so that each frame may not be affected by their respective previous frames, and that an error rate may be uniformly maintained. In this manner, it is possible to prevent unwanted color mixing and facilitate tuning for a target color. That is, it is possible to obtain the benefits of inserting black data with a 240 Hz display panel so as to minimize crosstalk. In a 3D display method that displays left- and right-eye images, pixel data may be configured to vary from a black level or drop to the black level at least once. Accordingly, it is possible to uniformly tune the level of crosstalk and thus to provide an improved sense of depth. The above-mentioned operations may be associated with the normalization of the beginning and end values of overdriving and a reset function.

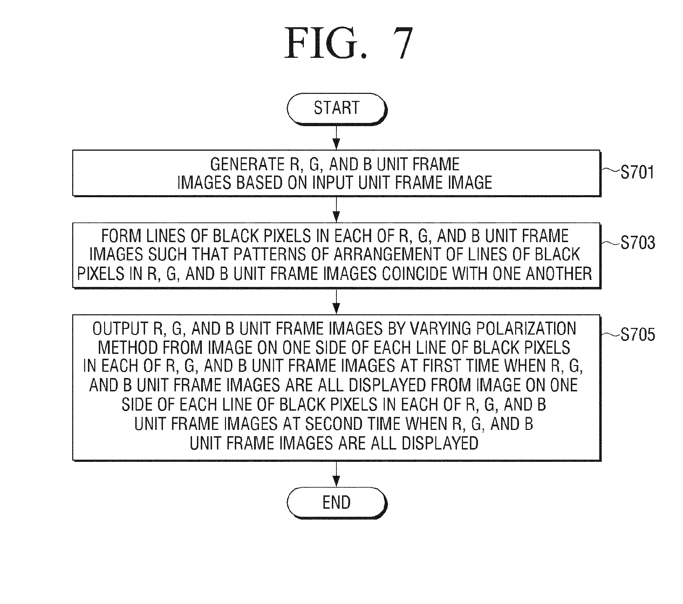

FIG. 7 is a flowchart illustrating a method of displaying a 3D image, according to an exemplary embodiment.

Referring to FIGS. 1 and 7, in operation S701, in a case in which the apparatus 100 includes a CFL display, the apparatus 100 may receive a unit frame image in which R, G, and B data are mixed, and may generate R, G, and B unit frame images based on the received unit frame image.

In operation S703, the apparatus 100 may form lines of black pixels in each of the R, G, and B unit frame images while alternating between odd-numbered lines and even-numbered lines such that the patterns of the arrangement of lines of black pixels in the R, G, and B unit frame images may coincide with one another. For example, the apparatus 100 may form even- or odd-numbered lines of each of the R, G, and B unit frame images as lines of black pixels. For example, the formation of black pixels not only includes the conversion of pixels into black data or the insertion of black data into a unit frame image but also includes the turning off of particular data lines through switching control.

In operation S705, the apparatus 100 may output the R, G, and B unit frame images by polarizing one side (or the other side) of each line of black pixels in each of the R, G, and B unit frame images at a first time during the sequential display of the R, G, and B unit frame images differently from one side (or the other side) of each line of black pixels in each of the R, G, and B unit frame images at a second time that follows the first time. Accordingly, parts of a left-eye image that are located on the left side of each line of black pixels in each of the R, G, and B unit frame images at the first time may be output as parts of a right-eye image at the second time, and parts of the right-eye image that are located on the right side of each line of black pixels in each of the R, G, and B unit frame images at the first time may be output as parts of the left-eye image at the second time.

In this manner, the left-eye image and the right-eye image may be alternately output from the apparatus 100 with respect to each line of black pixels in each of the R, G, and B unit frame images. The glasses 110 may receive the left-eye image and the right-eye image in accordance with the manner in which the left-eye image and the right-eye image are polarized and may thus allow a user to properly view the left-eye image and the right-eye image.

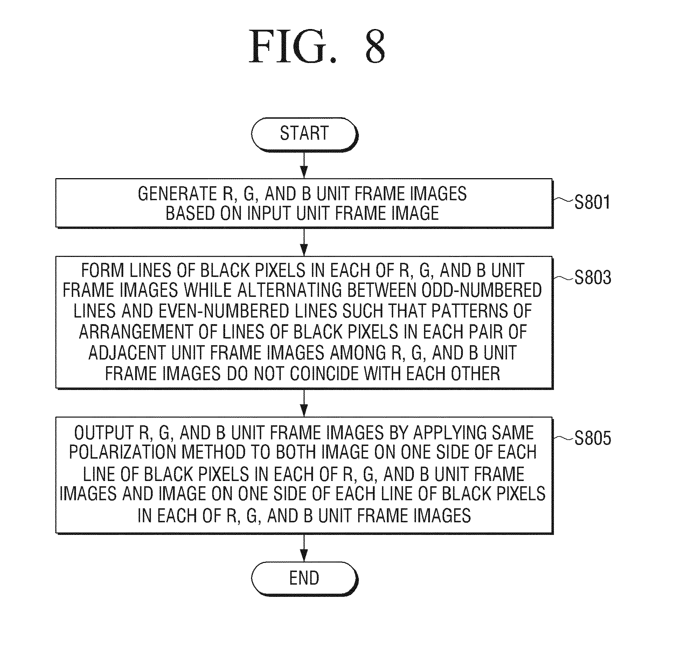

FIG. 8 is a flowchart illustrating a method of displaying a 3D image, according to an exemplary embodiment.

Referring to FIGS. 1 and 8, in operation S801, the apparatus 100 may generate R, G, and B unit frame images based on an input unit frame image. For example, the apparatus 100 may include a CFL display.

In operation S803, the apparatus 100 may form particular lines of each of the R, G, and B unit frame images while alternating between odd-numbered lines and even-numbered lines such that the patterns of the arrangement of lines of black pixels in each pair of adjacent frame images, among the R, G, and B unit frame images, may not coincide with each other. For example, odd-numbered lines of the R unit frame image may be formed as lines of black pixels, even-numbered lines of the G unit frame image that follows the R unit frame image may be formed as lines of black pixels, and odd-numbered lines of the B unit frame image that follows the G unit frame image may be formed as lines of black pixels.

In operation S805, the apparatus 100 may output the R, G, and B unit frame images by applying the same polarization method to one side (or the other side) of each line of black pixels in each of the R, G, and B unit frame images. For example, a portion on the left side of each line of black pixels in each of the R, G, and B unit frame images may be subject to a first polarization method, and a portion on the right side of each line of black pixels in each of the R, G, and B unit frame images may be subject to a second polarization method that is different from the first polarization method.

According to the above-mentioned exemplary embodiments, it is possible to realize a 3D image with improved quality even on a digital information display (DID), which generally requires high luminance, by applying an active polarizing element such as, for example, an active retarder, to a CFL display. In addition, it is possible to enable color tuning and thus prevent or reduce crosstalk during the realization of a 3D image by normalizing the response time of a liquid crystal layer

The foregoing exemplary embodiments and advantages are merely exemplary and are not to be construed as limiting the inventive concept. The present teaching can be readily applied to other types of apparatuses. Also, the description of the exemplary embodiments is intended to be illustrative, and not to limit the scope of the claims, and many alternatives, modifications, and variations will be apparent to those skilled in the art.

## Claims

1. An apparatus for displaying a three-dimensional 3D image, the apparatus comprising:
an image correction unit which receives a first image including a plurality of left-eye pixels and a plurality of right-eye pixels, and generates red (R), green (G), and blue (B) frames based on the first image;
a display panel which sequentially displays the R, G, and B frames; and
a polarizing element which controls a direction of polarization so that a plurality of left-eye pixels and a plurality of right-eye pixels in each of the R, G, and B frames are polarized in different directions.

2. The apparatus of claim 1, wherein the R frame comprises a plurality of R left-eye pixels and a plurality of R right-eye pixels.

3. The apparatus of claim 2, wherein the R frame further comprises a plurality of black pixels which are arranged to be adjacent to the plurality of R left-eye pixels or the plurality of R right-eye pixels.

4. The apparatus of claim 3, wherein the plurality of black pixels are disposed between the plurality of R left-eye pixels and the plurality of R right-eye pixels.

5. The apparatus of any one of the preceding claims, wherein the image correction unit switches positions of the plurality of left-eye pixels and the plurality of right-eye pixels in each of the R, G, and B frames on a per-frame basis.

6. The apparatus of any one of the preceding claims, wherein the polarizing element controls a driving of a voltage to a liquid crystal element.

7. The apparatus of any one of the preceding claims, wherein the display panel sequentially displays the R, G, and B frames by synchronizing a color filter-less CFL liquid crystal display LCD and an RGB backlight.

8. The apparatus of any one of the preceding claims, wherein the image correction unit controls the display panel to sequentially display the R, G, and B frames each having the plurality of left-eye pixels, a plurality of color mixing-prevention pixels, and the plurality of right-eye pixels sequentially arranged therein.

9. A method of displaying a three-dimensional 3D image, the method comprising:
receiving a first image including a plurality of left-eye pixels and a plurality of right-eye pixels;
generating R, G, and B frames based on the first image and sequentially displaying the R, G, and B frames; and
controlling a direction of polarization so that a plurality of left-eye pixels and a plurality of right-eye pixels in each of the Red (R), Green (G), and Blue (B) frames are polarized in different directions.

10. The method of claim 9, wherein the R frame comprises a plurality of R left-eye pixels and a plurality of R right-eye pixels.

11. The method of claim 10, wherein the R frame further comprises a plurality of black pixels which are arranged to be adjacent to the plurality of R left-eye pixels or the plurality of R right-eye pixels.

12. The method of claim 11, wherein the plurality of black pixels are disposed between the plurality of R left-eye pixels and the plurality of R right-eye pixels.

13. The method of any one of claims 9 to 12, wherein the displaying comprises switching positions of the plurality of left-eye pixels and the plurality of right-eye pixels on a per-frame basis.

14. The method of any one of claims 9 to 13, wherein the controlling comprises controlling a driving of a voltage to a liquid crystal element.

15. The method of any one of claims 9 to 14, wherein the displaying comprises sequentially displaying the R, G, and B frames each having the plurality of left-eye pixels, a plurality of color mixing-prevention pixels, and the plurality of right-eye pixels sequentially arranged therein.
